# EUROPEAN PATENT APPLICATION

(11) **EP 1 111 523 A1**
(43) Date of publication of application: **27.06.2001**
(21) Application number: 00128508.9
(22) Date of filing: 27.12.2000
(51) Int. Cl.: G06F 17/60, B08B 15/02, F24C 15/20

(54) **Transmission system**

(30) Priority: 24.12.1999 IT BO990145 U
(71) Applicant: Gitronica S.r.l., 62010 Montelupone (IT)
(72) Inventor: Senigagliesi, Maurizio, 62012 Civitanova Marche (IT)
(74) Representative: Jorio, Paolo

(57) **Abstract**

A system for remote transmission of a shopping list, characterized by having fixed means for receiving the shopping list, and mobile means to which the shopping list is transmitted; and in that the mobile means include a cellular telephone device.

## Description

The present invention relates to a system for recording and transmitting a shopping list.

Such a recording and transmission system may be used to advantage, for example, on an exhaust hood, to which the following description refers purely by way of example.

Various systems for compiling shopping lists are known, and which may comprise, for example, a blackboard on which items to be purchased are written as they occur.

The main drawback of this system is that the list must be copied onto a sheet of paper or other medium for user reference at the time of purchase.

Moreover, even if the list has been written conscientiously on the blackboard, the user very often forgets to copy it onto a sheet of paper before leaving the house, and must therefore attempt to remember all the items in the list, with the risk of some being forgotten.

It is an object of the present invention to eliminate the aforementioned drawback.

According to the present invention, there is provided a system for remote transmission of a shopping list, characterized by comprising fixed means for receiving said shopping list, and mobile means to which said shopping list is transmitted; and in that said mobile means comprise a telephone device.

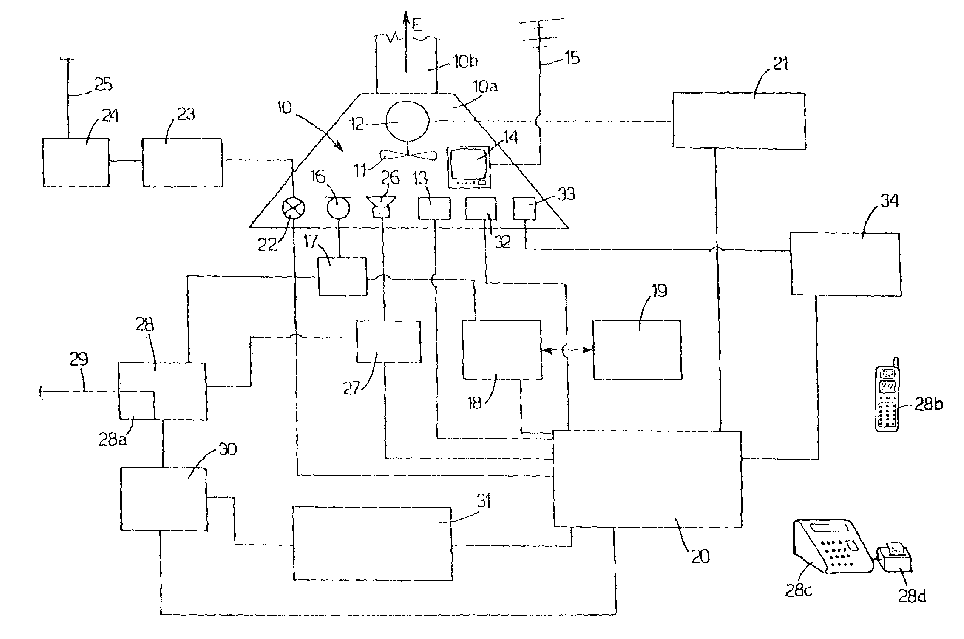

The present invention will be described with reference to the accompanying drawing showing a nonlimiting embodiment by way of example.

Number 10 in the accompanying drawing indicates an exhaust hood in accordance with the present invention, and which comprises a shaped sheet metal enclosure 10a possibly welded to an exhaust pipe lOb for expelling cooking smoke and steam into the outside atmosphere E. Enclosure 10a houses in known manner a fan 11, which is rotated by an electric motor 12 activated by a control device 13 comprising a keyboard or a number of push-buttons, or by voice control means as described later on.

Enclosure 10a may also comprise a television 14 specially designed to combine as unobtrusively as possible with the other devices on hood 10, and which is connected in known manner to an aerial 15 for receiving any, even satellite, television signals.

Enclosure 10a also comprises a microphone 16 connected to an A/D analog-digital converting device 17 for converting a user-imparted voice command into a train of binary signals, which are transmitted to a voice recognition device 18 connected electronically in known manner to an electronic data bank 19 containing user voice recordings. All operations are controlled by an electronic central control unit 20, which activates electric motor 12 via an electronic actuating device 21.

By speaking into microphone 16, the user may therefore activate motor 12 and, hence, fan 11 to expel any smoke or steam along pipe lOb into the outside atmosphere E.

This type of control is particularly useful when both the user's hands are engaged, or to start fan 11 without touching control device 13 when the user's hands are greasy or wet, thus keeping enclosure 10a and device 13 clean and also preventing any moisture on the user's hands from coming into contact with live devices.

Electronic data bank 19 may contain voice recordings of most-frequent users, so that central control unit 20 and device 21 may operate fan 11 at the speed preferred by each user and possibly also vary other operating parameters of fan 11. That is, together with electronic data bank 19, central control unit 20 recognizes the voice of a particular user by comparing it with the recorded voices stored in data bank 19, and so commands rotation of fan 11 at that particular user's selected speed. As will be clear to anyone skilled in the art, a particular voice command may also be issued each time, at the user's discretion, to determine a given speed or other operating parameters of fan 11.

Again via central control unit 20, a voice command into microphone 16 may also activate a lamp 22 (e.g. a LED, filament, fluorescent lamp, etc.), and possibly also adjust the brightness and/or select the color of the light emitted by lamp 22. In other words, using the voice control described (microphone 16) or control device 13, hood 10 may be combined with a lamp 22 adjustable to achieve predetermined color effects, e.g. effects relaxing to the user standing in front of hood 10. Whichever the case, lamp 22 is connected electrically to a power supply 23 in turn connected to an emergency device 24 connected to an electric line 25. In the event of a power cut, for any reason, along line 25, emergency device 24 automatically comes into operation to keep lamp 22 on.

Alongside microphone 16 is a loudspeaker 26, which is connected, via an amplifier 27, to a telephone interface 28 connected to a telephone line 29, and performs two functions. On the one hand, together with microphone 16, it serves as a telephone for loudvoice communicating with the outside. In this case, too, the user standing in front of the cooker can receive and make telephone calls using microphone 16, loudspeaker 26, telephone interface 28 and telephone line 29, and device 13 may also be used for telephone number selection.

Together with central control unit 20, microphone 16 may also be used for recording any voice message, which may be called up, for example, by means of control device 13. A written message may, obviously, also be recorded by means of device 13, which, as stated, comprises a keyboard or a number of push-buttons.

On the other hand, loudspeaker 26, which, as stated, is connected electrically to amplifier 27, may be used for broadcasting into the kitchen music in MP3 format or similar from an internet web site. The music may be controlled by an internet control device 30 and is converted by a converter 31.

By means of device 13, central control unit 20 and internet control device 30, the user may call up any internet web site, in particular that of the maker of hood 10, from which to obtain, for example, information concerning operation of hood 10, recipes, horoscopes, etc. For which purpose, a screen 32 may also be provided on enclosure 10a for displaying the internet web site information. Obviously, devices 13, 30 and screen 32 may also be used for sending and receiving electronic-mail messages, and television 14 may also be used as a screen (display) 32, so that one device may be dispensed with. Screen 32 or television 14 may also form part of a more complex video intercom system (not shown), the obvious advantage of which additional function is that of enabling the user to answer the doorbell from the kitchen, standing in front of hood 10.

By means of device 13 or microphone 16, the user may also enter individual shopping items into the memory of central control unit 20, so as to compose a "shopping list", which may then be downloaded onto a portable telephone, e.g. in the form of SMS messages, even, for example, at a considerable distance from the kitchen in which hood 10 is installed. For this operation, the user may employ telephone line 29 and the devices connected to it.

More specifically, telephone interface 28 may comprise a cell phone card 28a for communicating radiotelephonically with a cell phone 28b and transmitting telephone messages radiotelephonically to cell phone 28b over a GSM, GPRS or UMTS system.

To reduce cost, internet control device 30 may be used in place of card 28a, and the shopping list transmitted to a remote portable for directing the messages to cell phone 28b.

The messages may be in writing using the SMS system and/or in icon form using the UMTS system. In the latter case, icons will appear on cell phone 28b representing the various items to be purchased by the user of cell phone 28b.

By known means, the shopping list messages may be downloaded periodically onto cell phone 28b, or may be remote requested from the system by the user of cell phone 28b at the time of purchase.

Both the written and icon shopping lists can be sorted by the electronic system into a sequence of purchase items according, for example, to the supermarket location of the items or the route to be followed by the user of cell phone 28b between individual retailers.

That is, the user, possibly using cell phone 28b itself, may, for example, enter the words "ROSSI Supermarket". In which case, the electronic system itself will arrange the written or icon shopping list into a sequence corresponding to that in which the items are displayed at the "ROSSI Supermarket". Obviously, the sequence of the items in the shopping list will normally vary from one supermarket to another.

Using a supermarket cash register 28c and printer 28d, cell phone 28b may be used to request a printout of the shopping list recorded at home by means of microphone 16 and/or control device 13, so as to obtain a shopping list printed on paper with the various purchase items possibly in the desired sequence. This may possibly simplify use of the system according to the present invention by users unfamiliar with the display signals on cell phone 28b.

The supermarket manager may be encouraged to permit use of printer 28d by allowing sales promotion messages to also be printed on the shopping list printout, so as to inform the user of cell phone 28b at the outset of any special offers to be found in the supermarket. Such offers may be shown on the printout in the same order as the various purchase items on the shopping list.

In exchange for printing the shopping list on printer 28d, the supermarket manager may also be allowed to transmit, e.g. over internet, sales promotion messages, which may be displayed, for example, on display 32 on hood 10 or on the cell phone 28b display.

The advantages of this type of embodiment are obvious. The user may write or record purchase items by voice means on a system-controlled shopping list; the shopping list may be updated, possibly by others and at different times of the same day or on different days, and can be remote downloaded onto a cell phone 28b, possibly with the purchase items arranged in the desired sequence, in the event, as often happens, the shopping list written on paper has been left at home; and the shopping list may be printed on the supermarket printer 28d to assist reading of the list by users unfamiliar with electronic means.

Though reference is made to an exhaust hood 10 for the sake of simplicity, the shopping list transmission system according to the present invention may obviously be applied to any type of electric household appliance.

Hood 10 according to the present invention may also comprise a television camera 33 for remote monitoring the cooking range (not shown) underneath. By means of television camera 33, also controlled by central control unit 20, and a picture transmitting device (not shown), the user may leave the kitchen, e.g. go into another room in the house, and monitor the pans covered by television camera 33. With the aid of a video recorder 34, television camera 33 may also be used for recording the presence of any intruders in the kitchen in the absence of the owner of the premises.

As will be clear to anyone skilled in the art, the devices described may be used for purposes other than those illustrated without, however, departing from the scope of the present invention.

## Claims

1. A system for remote transmission of a shopping list, characterized by comprising fixed means for receiving said shopping list, and mobile means to which said shopping list is transmitted; and in that said mobile means comprise a cellular telephone device.

2. A system as claimed in Claim 1, wherein said fixed means comprise means for recording messages entered by means of a keyboard and/or a voice control device.

3. A system as claimed in any one of the foregoing Claims, wherein data is transmitted between said fixed means and said mobile means over a GSM, GPRS or UMTS system.

4. A system as claimed in any one of the foregoing Claims, wherein the shopping list data is downloaded periodically onto said mobile means.

5. A system as claimed in any one of Claims 1 to 3, wherein the shopping list data is downloaded by request of a user of said mobile means.

6. A system as claimed in any one of the foregoing Claims, wherein the sequence in which the names of the various items on the shopping list are arranged is determined automatically as a function of the way in which said items are displayed on the shelves of a supermarket whose name is entered by the user into the system.

7. A system as claimed in any one of Claims 1 to 5, wherein the sequence in which the names of the various items on the shopping list are arranged is determined automatically as a function of a route followed by the user of said mobile means between different retailers; said route being entered by the user into the system.

8. A system as claimed in any one of the foregoing Claims, wherein messages are downloaded onto said mobile means in SMS and/or icon form.

9. A system as claimed in any one of the foregoing Claims, wherein said shopping list transmitted by said fixed means may be printed on a printer.

10. A system as claimed in Claim 9, wherein sales promotion messages are printed together with said shopping list.
